# EUROPEAN PATENT APPLICATION

(11) **EP 3 251 488 A1**
(43) Date of publication of application: **06.12.2017**
(21) Application number: 17172406.5
(22) Date of filing: 23.05.2017
(51) Int. Cl.: A01D 34/412

(54) **VEGETATION CUTTING TOOL**

(30) Priority: 30.05.2016 CN 201610369447; 30.05.2016 CN 201620503797 U
(71) Applicant: Chervon (HK) Limited, 999077 Hong Kong (CN)
(72) Inventor: ZHANG, Qi, Nanjing, 211106 (CN); NIE, Fangjie, Nanjing, 211106 (CN)
(74) Representative: Sun, Yiming

(57) **Abstract**

A vegetation cutting tool (100) includes a cutting head (10), an input shaft (45), an output shaft (46), a transmission assembly (44) and a transmission housing accommodating the transmission assembly. The transmission housing (40) includes a skirt portion (41) having a small end away from the cutting head and a big end adjacent to the cutting head, a shank (42) extending along the first axis from the skirt portion, and a stop portion (43) connecting the skirt portion and the shank. The stop portion forms a stop face extending from the skirt portion to the shank for preventing grass clippings winding around the transmission housing.

## Description

### FIELD OF THE DISCLOSURE

The present disclosure relates generally to a vegetation cutting tool.

### BACKGROUND OF THE DISCLOSURE

A grass trimmer or brush cutter is as a vegetation cutting tool. The grass trimmer is for cutting grass. The brush cutter is for cutting bush. The vegetation cutting tool has a transmission housing. The transmission housing is easily wound by grass clippings. It will decrease the working efficiency.

The statements in this section merely provide background information related to the present disclosure and may not constitute prior art.

### SUMMARY

In one aspect of the disclosure, a vegetation cutting tool may include a cutting head for cutting vegetation, an input shaft rotating around a first axis, an output shaft rotating around a second axis which is configured to intersect with the first axis, a transmission assembly for performing torque transmission between the input shaft and the output shaft, and a transmission housing for accommodating the transmission assembly. the transmission housing may include a skirt portion having a small end away from the cutting head and a big end adjacent to the cutting head, a shank extending along the first axis from the skirt portion, and a stop portion connecting the skirt portion and the shank. The stop portion forms a stop face extending from the skirt portion to the shank for preventing grass clippings winding around the transmission housing.

In other aspect of the disclosure, a vegetation cutting tool may include a cutting head for cutting vegetation, an input shaft rotating around a first axis, an output shaft rotating around a second axis which is configured to intersect with the first axis, a transmission assembly for performing torque transmission between the input shaft and the output shaft, a transmission housing for accommodating the transmission assembly, and a stop part. The transmission housing may include a skirt portion having a small end away from the cutting head and a big end adjacent to the cutting head, and a shank extending along the first axis from the skirt portion. The stop part forms a stop portion which is disposed between the skirt portion and the shank for preventing grass clippings winding around the transmission housing.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

FIG. 1 is a schematic view of an exemplary vegetation cutting tool.
FIG. 2 is a partial, enlarged drawing of part of the vegetation cutting tool in FIG. 1.
FIG. 3 is a schematic view of an output shaft and an input shaft of the vegetation cutting in FIG. 1.
FIG. 4 is a schematic view of a transmission housing of the vegetation cutting in FIG. 1.
FIG. 5 is an other schematic view of a transmission housing in FIG. 4.
FIG. 6 is a schematic view showing the stop face of the transmission housing in FIG. 4.
FIG. 7 is a section view of the transmission housing in FIG. 4.
FIG. 8 is a front view of the transmission housing in FIG. 4.
FIG. 9 is a schematic view of an alternative exemplary vegetation cutting tool.
FIG. 10 is a partially enlarged drawing of part of the vegetation cutting tool in FIG. 9.
FIG. 11 is an exploded view of part of the vegetation cutting tool in FIG. 10.
FIG. 12 is a section view of the vegetation cutting tool in FIG. 10.
FIG. 13 is a schematic view of the vegetation cutting tool in FIG. 10.
FIG. 14 is a schematic view of the stop part in FIG. 10.

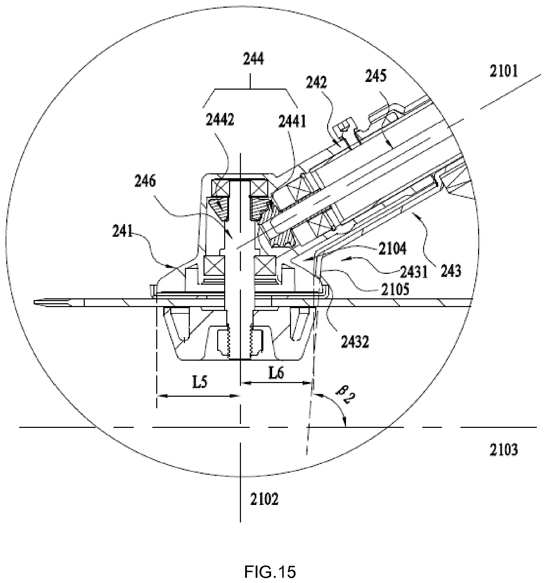

FIG. 15 is an exploded view of part of the vegetation cutting tool in FIG. 12.
FIG. 16 is a schematic view of part of another exemplary vegetation cutting tool.
FIG. 17 is another schematic of the structure shown in FIG. 16.
FIG. 18 is an exploded view of the structure shown in FIG. 17.

The drawings described herein are for illustrative purposes only of selected embodiments and not all possible implementations, and are not intended to limit the scope of the present disclosure. Corresponding reference numerals indicate corresponding parts throughout the several views of the drawings.

### DETAILED DESCRIPTION

The following description of the preferred embodiments is merely exemplary in nature and is in no way intended to limit the invention, its application, or uses.

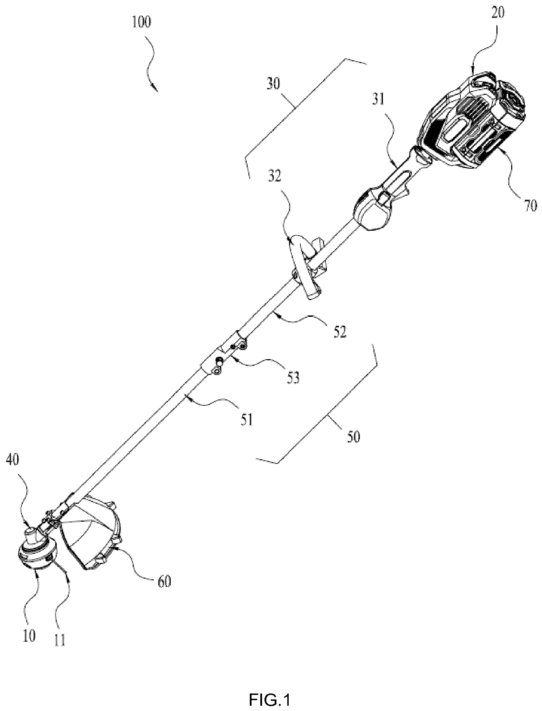

Referring to FIGS. 1-2, a vegetation cutting tool 100 includes a cutting head 10, a motor (not labeled), a housing 20, a handle30, a transmission housing 40, a long tube 50 and a shield 60.

The cutting head 10 is for cutting vegetation. As shown in FIG. 1, the cutting head 10 is a trimmer head. A trimmer line 11 is mounted in the trimmer head. The trimmer line 11 is a cutting member of the cutting head 10. The vegetation cutting tool 100 is a grass trimmer. As an alternative embodiment, instead of the trimmer line, a blade for cutting the bush is a cutting member, the vegetation cutting tool is a brush cutter.

The motor drives the cutting head 10. The housing 20 accommodates the motor. The motor is disposed in the housing 20. The motor may be an engine or an electric motor. The motor is an electric motor. The vegetation cutting tool 100 is as an electric power tool. The electric motor is powered by a battery 70. The battery 70 is detachable connected to the housing 20.

The handle 30 is held by an operator. The vegetation cutting tool 100 is as a hand-held tool. As shown in FIG. 1, the handle 30 may include a first handle 31 and a second handle 32. The both hands of an operator may respectively hold the first handle 31 and the second handle 32 to operate the vegetation cutting tool 100. The first handle 31 and the second handle 32 is fixed to a long tube 50. The long tube 50 connects the housing 20 to the transmission housing 40. The housing 20 and the transmission housing 40 are respectively fixed to the both ends of the long tube 50. The long tube 50 may be one single tube or multiple tubes. The long tube 50 includes a first tube 51, a second tube 52, and a connecting base 53. The first tube 51 is fixed to the transmission housing 40. The second tube 52 is fixed to the housing 20. The connecting base 53 connects the first tube 51 to the second tube 52. The first tube 51 and the second tube 52 may be detached from each other for easily storage and transporting. The shield 60 is for protecting the operator. The shield 60 may install to the transmission housing 40 or the long tube 50.

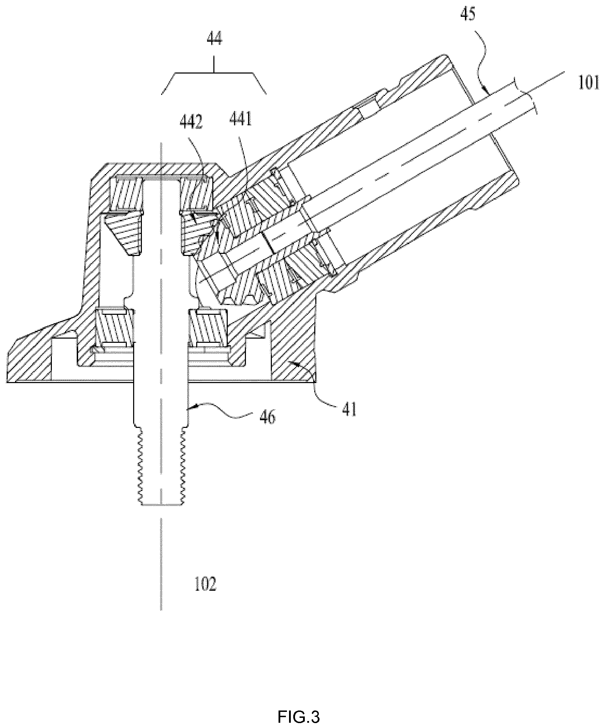

As shown in FIG. 3, the vegetation cutting tool 100 may also include an input shaft 45, an output shaft 46 and a transmission assembly 44. The motor drives the input shaft 45. The input shaft 45 rotates around a first axis 101. The output shaft 46 rotates around a second axis 102. The first axis 101 is configured to intersect with the second axis 102. The transmission assembly 44 performs torque transmission between the input shaft 45 and the output shaft 46. The transmission assembly 44 may include a first transmission part 441 and a second transmission part 442. As shown in FIG. 3, the first transmission part 441 is fixed to the input shaft 45 and the second transmission part 442 is fixed to the output shaft 46. The first transmission part 441 drives the second transmission part 442 to rotate. The cutting head 10 is connected to the output shaft 46. The output shaft 46 drives the cutting head 10 to rotate. The transmission housing 40 accommodates the first transmission part 441 and the second transmission part 442. The first transmission part 441 and the second transmission part 442 are bevel gears. The first transmission part 441 engages with the second transmission part 442.

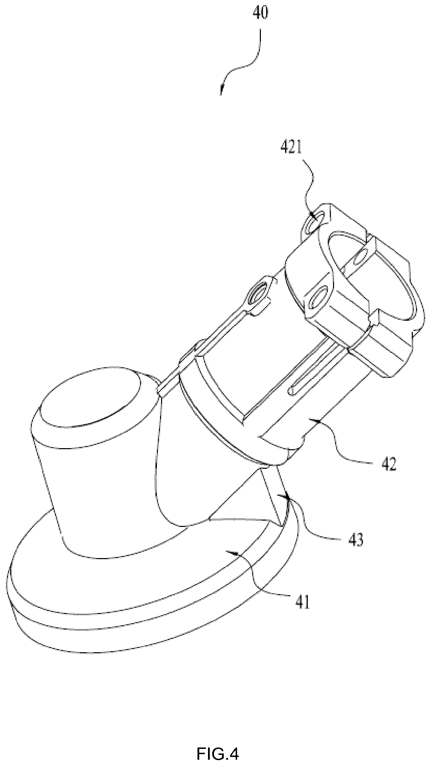

As shown in FIG. 4, the transmission housing 40 may include a skirt portion 41, a shank 42 and a stop portion 43. As an embodiment, the skirt portion 41, the shank 42 and the stop portion 43 may be three separate parts. The stop portion 43 is fixed to the skirt portion 41 or the shank 42. In an alternative embodiment, the skirt portion 41 and the shank 42 may be molded in one-piece. The stop portion 43 is fixed to the whole of the skirt portion 41 and the shank 42. As another embodiment, the transmission housing 40 may be two-half structure. The skirt portion 41 may be two-half structure. The shank 42 may be two-half structure. The whole of the skirt portion 41, the shank 42 and the stop portion 43 may be two-half structure.

The transmission housing 40 is molded in one-piece. The skirt portion 41, the shank 42 and the stop portion 43 are also molded in one-piece. The shank 42 is connected to the shirt portion 41. The stop portion 43 is connected to the skirt portion 41 and the shank 42.

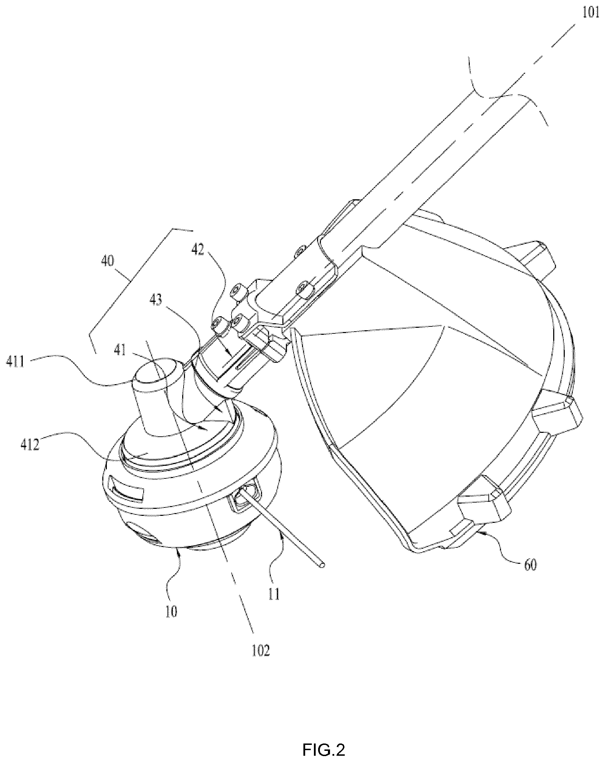

As shown in FIG. 2, the skirt portion 41 has a big end 412 and a small end 411. The small end 411 is far away from the cutting head 10. The big end 412 is close to the cutting head 10. The shank 42 extends along the first axis 101 from the skirt portion 41. Referring to FIGS. 2 and 4, the shank 42 forms a mounting hole 421 for mounting the shield 60. The mounting hole 421 and the stop portion 43 are disposed on two sides of the first axis 101.

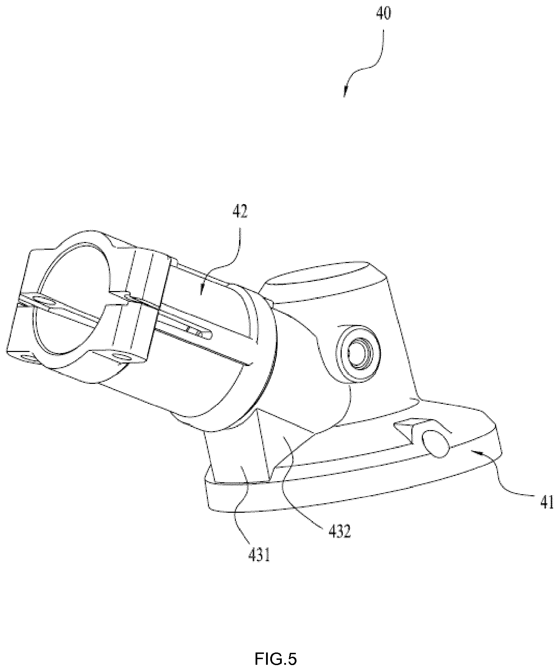

Referring to FIGS. 4 and 5, the stop portion 43 forms a stop face 431. The stop face 431 extends from the skirt portion 41 to the shank 42.

In a plane defined by the first axis 101 and the second axis 102, a projection of the stop face 431 intersects with the second axis 102. The projection of the stop face 431 may directly intersect with the second axis 102. The extension line of the projection of the stop face 431 may also intersect with the second axis 102.

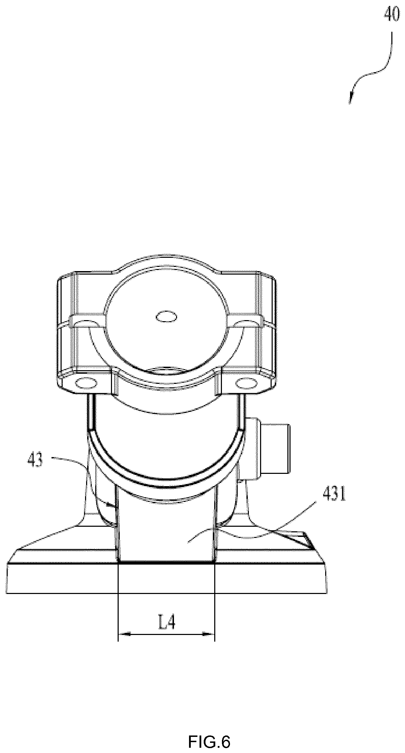

The stop portion 43 may be as a thin rib or a thick lump. Referring to FIGS. 6-7, a minimum size L4 of the stop portion 43 in a direction substantially perpendicular to a plane defined by the first axis 101 and the second axis 102 is greater than or equal to 1 mm and less than or equal to 25mm. 1mm ≤L4 ≤25mm. Further, 15mm ≤L4 ≤25mm. The stop portion 43 is as s thick lump.

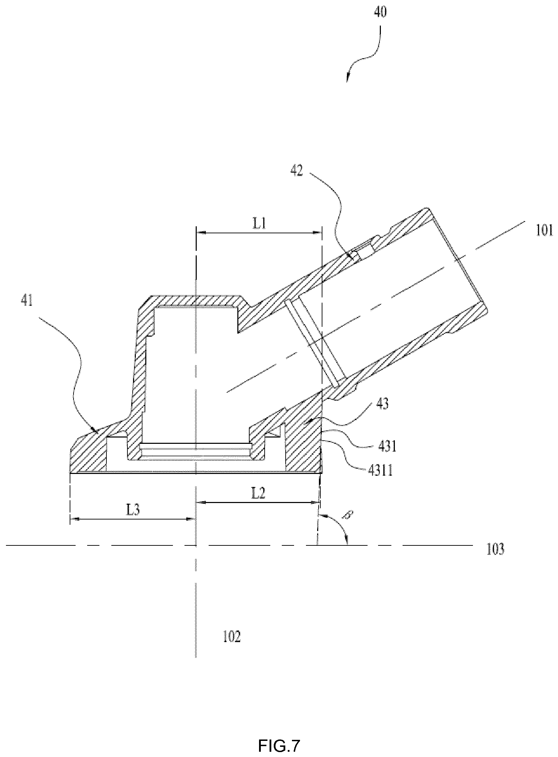

As shown in FIG. 7, an intersection line of the stop face 431 with a plane defined by the first axis 101 and the second axis 102 is defined as a first intersection line 4311. The first intersection line 4311 is a straight line.

An angle β between the first intersection line 4311 and a plane 103 substantially perpendicular to the second axis 102 is less than 90°. β<90°.

A distance L1 from an intersection point of the shank 42 with the first intersection line 4311 to the second axis 102 is greater than or equal to a distance L2 from an intersection point of the skirt portion 41 with the first intersection line 4311 to the second axis 102.

The difference between a maximum distance L3 from a surface of the skirt portion 41 to the second axis 102 and a distance L2 from an intersection point of the skirt portion 41 with the first intersection line 4311 to the second axis 102 is greater than or equal to 0mm and less than or equal to 10mm. 0mm≤L3-L2≤10mm.

The ratio of between a maximum distance L3 from a surface of the skirt portion 41 to the second axis 102 and a distance L2 from an intersection point of the skirt portion 41 with the first intersection line 4311 to the second axis 102 is greater than or equal to 1 and less than or equal to 2. 1≤L3/L2≤2.

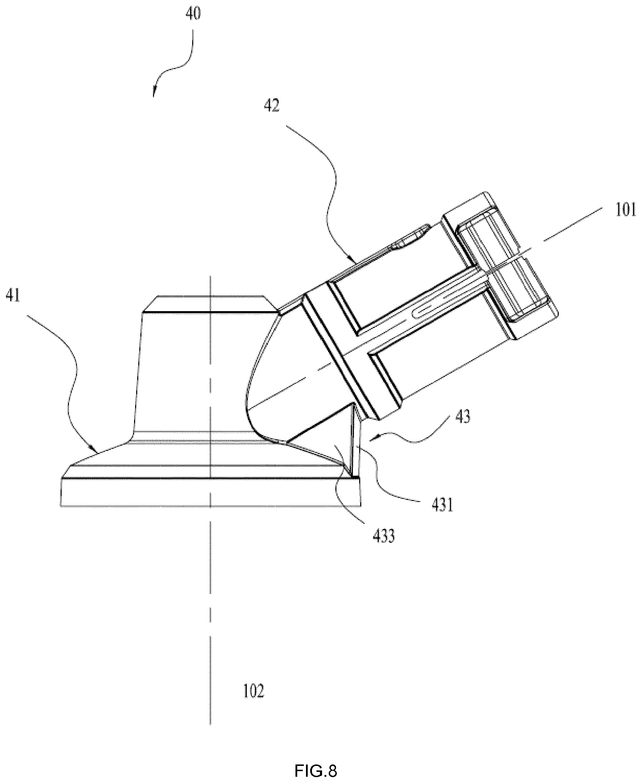

Referring to FIGS. 4-9, the stop face 431 is symmetrical about a plane defined by the first axis 101 and the second axis 102. The stop face 431 is a camber. The stop portion 43 forms a first face 432 and a second face 433. The stop face 431 is connected to the first face 432 and the second face 433. The first face 432 is connected to the skirt portion 41 and the shank 42. The second face 433 is connected to the shirt portion 41 and the shank 42. The first face 432 is a plane. The second face 433 is a plane. The first face 432 is oblique relative to the second face 433. the first face 432 and the second face 433 is symmetrical about a plane defined by the first axis 101 and the second axis 102. The minimum distance from the first face 432 to the second face 433 is the minimum size of the stop portion 43 in a direction substantially perpendicular to a plane defined by the first axis 101 and the second axis 102.

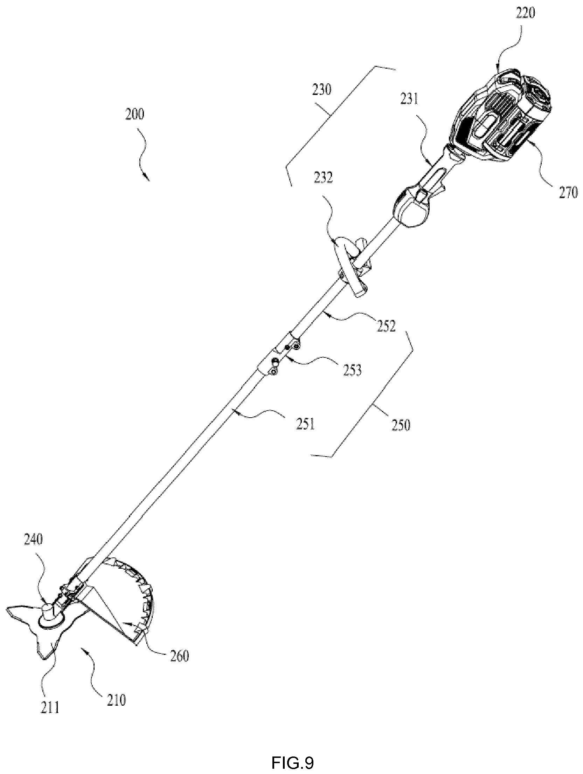

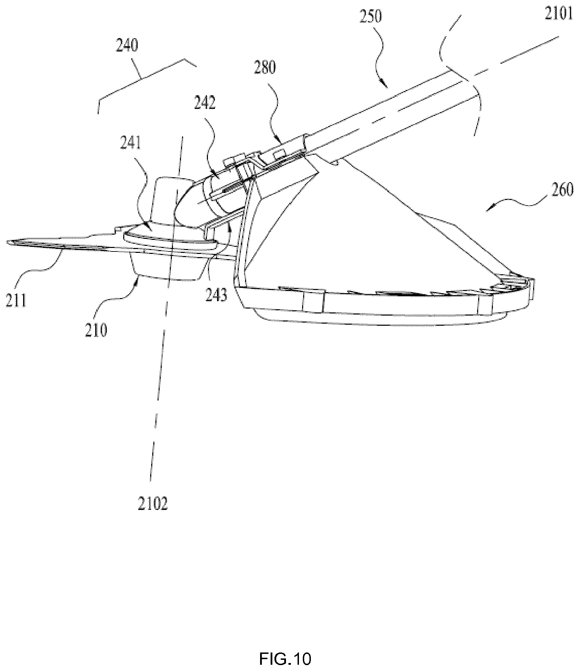

Referring to FIGS. 9-10, a vegetation cutting tool 200 may include a cutting head 210, a motor, a housing 220, a handle 230, a transmission housing 240, a long tube 250 and a shield 260.

The cutting head 210 is for cutting vegetation. As shown in FIG. 9, the cutting head 210 may include a blade 211. The blade 211 is a cutting member, the vegetation cutting tool 200 is brush cutter. Instead of the blade, a trimmer line is a cutting member, the vegetation cutting tool 200 is a grass trimmer. The motor drives the cutting head 210. The housing 220 accommodates the motor. The motor is disposed in the housing 220. The motor may be an engine or an electric motor. The motor is an electric motor. The vegetation cutting tool 200 is as an electric power tool. The electric motor is powered by a battery 270. The battery 270 is detachable connected to the housing 220.

The handle 230 is held by an operator. The vegetation cutting tool 200 is as a hand-held tool. As shown in FIG. 9, the handle 230 may include a first handle 231 and a second handle 232. The both hands of an operator may respectively hold the first handle 231 and the second handle 232 to operate the vegetation cutting tool 200. The first handle 231 and the second handle 232 is fixed to a long tube 250. The long tube 250 connects the housing 220 to the transmission housing 240. The housing 220 and the transmission housing 240 are respectively fixed to the both ends of the long tube 250. The long tube 250 may be one single tube or multiple tubes. The long tube 250 includes a first tube 251 and a second tube 252. The first tube 251 is fixed to the transmission housing 240. The second tube 252 is fixed to the housing 220. A connecting base 253 connects the first tube 251 to the second tube 252. The first tube 251 and the second tube 252 may be detached from each other for easily storage and transporting. The shield 260 is for protecting the operator. The shield 260 is configured as a fan shape around the cutting head cutting head 210. The shield 260 may install to the transmission housing 240 or the long tube 250. The vegetation cutting tool 200 may include a fixed part 280. One end of the fixed part 280 is fixed to the transmission housing 240, and the other end of the fixed part 280 is fixed to the shield 260. The fixed part 280 and the shield 260 hold the long tube 250.

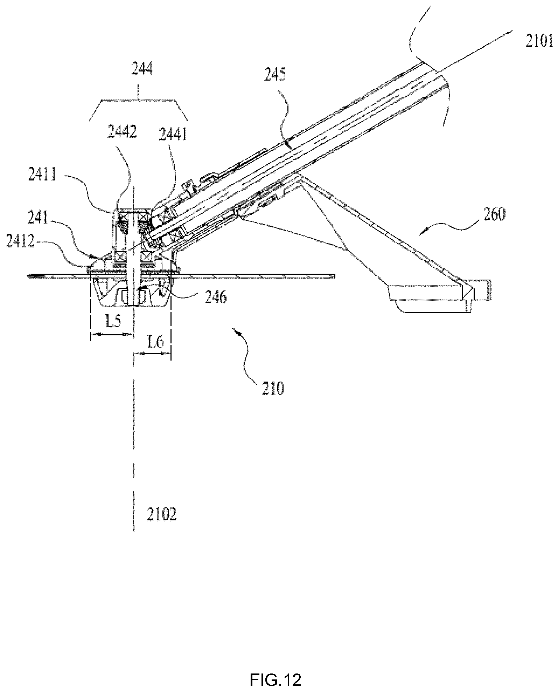

Referring to FIG. 12, the vegetation cutting tool 200 may also include an input shaft 245, an output shaft 246 and a transmission assembly 244. The motor drives the input shaft 245. The input shaft 245 rotates around a first axis 2101. The output shaft 246 rotates around a second axis 2102. The first axis 2101 is configured to intersect with the second axis 2102. The transmission assembly 244 performs torque transmission between the input shaft 245 and the output shaft 246. The transmission assembly 244 may include a first transmission part 2441 and a second transmission part 2442. As shown in FIG. 12, the first transmission part 2441 is fixed to the input shaft 245 and the second transmission part 2442 is fixed to the output shaft 246. The first transmission part 2441 drives the second transmission part 2442 to rotate. The cutting head 210 is connected to the output shaft 246. The output shaft 246 drives the cutting head 210 to rotate. The transmission housing 240 accommodates the first transmission part 2441 and the second transmission part 2442. The first transmission part 2441 and the second transmission part 2442 are bevel gears. The first transmission part 2441 engages with the second transmission part 2442.

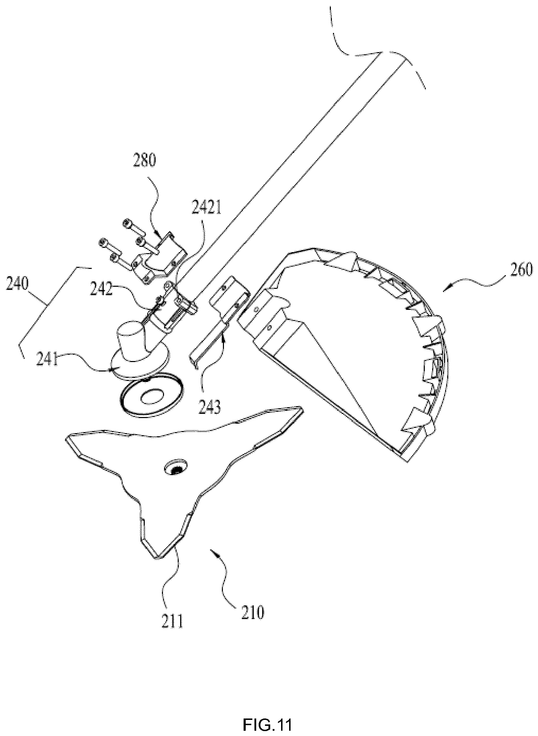

Referring to FIGS. 11-12, the transmission housing 40 may include a skirt portion 241 and a shank 242. As an embodiment, the skirt portion 241 and the shank 242 may be two separate parts. As another embodiment, the transmission housing 240 may be two-half structure. The skirt portion 241 may be two-half structure. The shank 242 may be two-half structure. The whole of the skirt portion 241 and the shank 242 may be two-half structure. The transmission housing 240 is molded in one-piece. The skirt portion 241 and the shank 242 are molded in one-piece.

Referring to FIGS. 12-13, the skirt portion 241 has a big end 2412 and a small end 2411. The small end 2411 is far away from the cutting head 210. The big end 2412 is close to the cutting head 210. The shank 242 extends along the first axis 2101 from the skirt portion 241.

With regard to the traditional vegetation cutting tool, the transmission housing is easily wound by grass clippings. It will impact the working efficiency. As shown in FIG. 11, the vegetation cutting tool 200 may include a stop part 243 for preventing grass clippings winding around the transmission housing 240. The shank 242 forms a mounting hole 2421 for mounting the shield 260.

The stop part 243 may be fixed to the transmission housing 240. The stop part 243 is fixed to the shank 242. As another embodiment, the stop part 243 may be fixed to the shield 260. As another embodiment, the stop part 243 may be fixed to the long tube 250.

The fixed part 280 and the shield 260 hold the long stop part 243. The stop part 243 is disposed between the fixed part 280 and the shield 260.

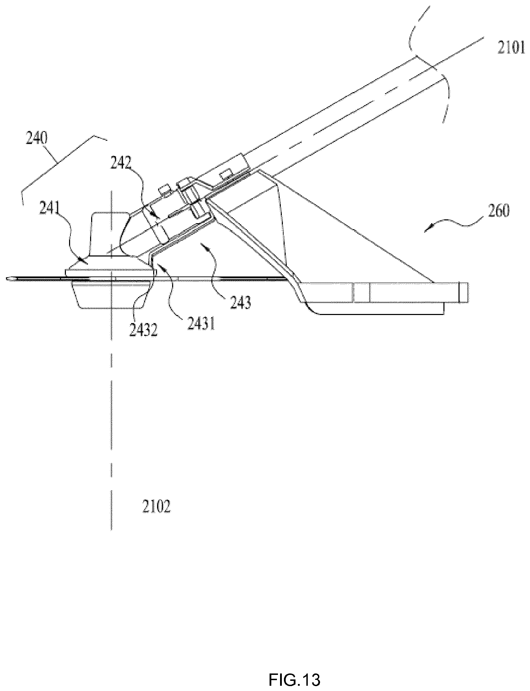

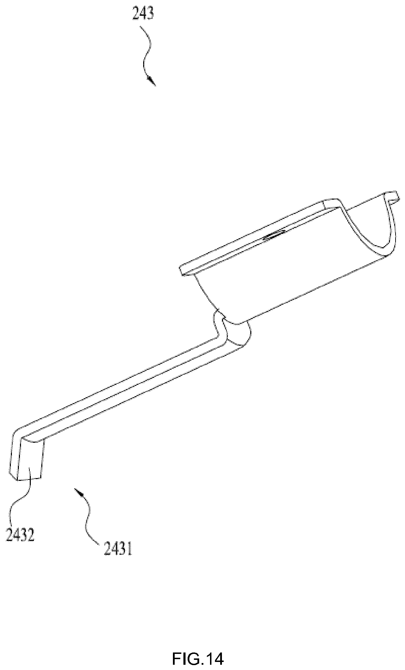

As shown in FIGS. 13-14, the stop part 243 forms a stop portion 2431. The stop portion 2431 is for preventing grass clippings winding around the transmission housing 240. The stop portion 2431 is disposed between the skirt portion 241 and the shank 242. As shown in FIG. 13, in a plane defined by the first axis 2101 and the second axis 2102, projections of the shank 242 and the shirt portion 241 forms an angle area. At least portion of stop part 243 is at least located within the angle area. The stop portion 2431 is within the angle area. The plane shown in FIG. 12 is the plane defined by the first axis 2101 and the second axis 2102.

The stop part 243 and the transmission housing 240 cooperatively define a channel 2104 in a direction substantially perpendicular to a plane defined by the first axis 2101 and the second axis 2102.

A maximum distance L5 from a surface of the skirt portion 241 to the second axis 2102 is greater than a distance L6 from the stop part 243 to the second axis 2102, L5≥L6. A distance L6 from the stop part 243 to the second axis 2102 is greater than or equal to 25mm and less than or equal to 80mm.

The difference between a maximum distance L5 from a surface of the skirt portion 241 to the second axis 2102 and a distance from the stop part 243 to the second axis 2102 is greater than or equal to 0mm and less than or equal to 10mm. 0mm≤L5-L6≤10mm.

The stop portion 2431 forms a stop face 2432. An intersection line of the stop face 2431 with a plane 2103 defined by the first axis 2101 and the second axis 2102 is defined as a first intersection line 2105, the first intersection line 2105 is a straight line. An angle β2 between the first intersection line 2105 and a plane 2103 perpendicular to the second axis 2102 is less than 90°, that is, β2<90°.

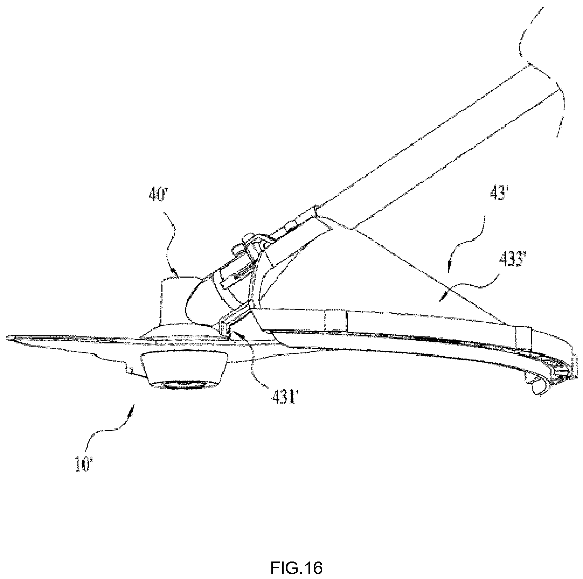

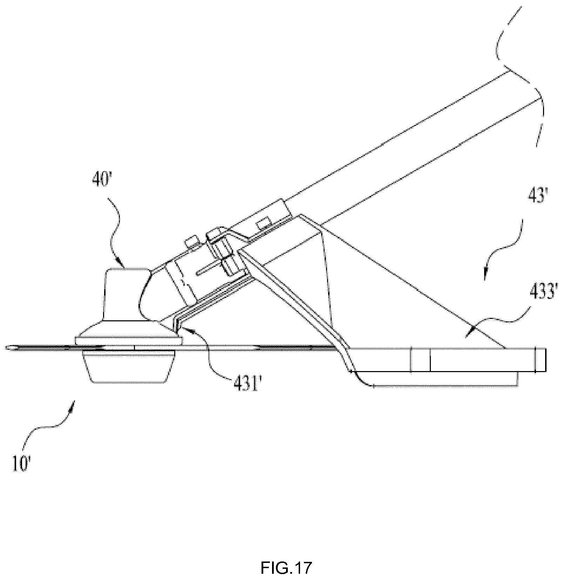

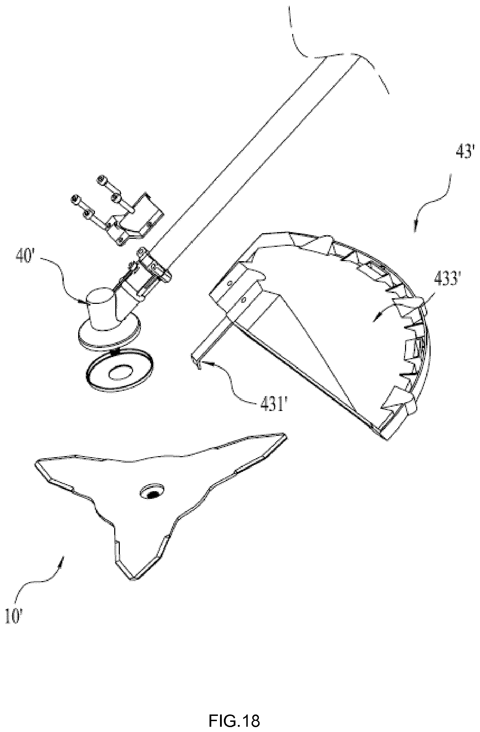

In another alternative embodiment, the transmission 40' and the cutting head 10' in FIGS. 16-18 is structurally identical to the transmission 240 and the cutting head 210 in FIGS. 9. The stop part 43' forms a protecting portion 433'. The protecting portion 433' is configured as a fan shape around the cutting head cutting head 10'. The stop part 43' is as a shield. The shield forms the stop portion 431'. The stop part 43' has a rib for increasing the intensity of the stop portion 431 '.

The above illustrates and describes basic principles, main features and advantages of the present invention. Those skilled in the art should appreciate that the above embodiments do not limit the present invention in any form. Technical solutions obtained by equivalent substitution or equivalent variations all fall within the scope of the present invention.

## Claims

1. A vegetation cutting tool (100), comprising:
a cutting head (10) for cutting vegetation;
an input shaft (45) rotating around a first axis (101);
an output shaft (46) rotating around a second axis (102) intersecting with the first axis (101);
a transmission assembly (44) for performing torque transmission between the input shaft (45) and the output shaft (46); and
a transmission housing (40) for accommodating the transmission assembly (44);
**characterized in that** the transmission housing (40) comprises:
a skirt portion (41) having a small end (411) away from the cutting head (10) and a big end (412) adjacent to the cutting head (10);
a shank (42) extending along the first axis (101) from the skirt portion (41); and
a stop portion (43) connecting the skirt portion (41) and the shank (42), the stop portion (43) forming a stop face (431) extending from the skirt portion (41) to the shank (42) for preventing grass clippings winding around the transmission housing (40).

2. The vegetation cutting tool (100) of claim 1, wherein a projection of the stop face (431) intersects with the second axis (102) in a plane defined by the first axis (101) and the second axis (102).

3. The vegetation cutting tool (100) of claim 2, wherein the stop face (431) is symmetrical about the plane defined by the first axis (101) and the second axis (102).

4. The vegetation cutting tool (100) of claim 1, wherein a intersection line of the stop face (431) with a plane defined by the first axis (101) and the second axis (102) is defined as a first intersection line (4311), the first intersection line (4311) is a straight line.

5. The vegetation cutting tool (100) of claim 4, wherein an angle (β) between the first intersection line (4311) and a plane (103) perpendicular to the second axis (102) is less than 90°.

6. The vegetation cutting tool (100) of claim 5, wherein a distance (L1) from an intersection point of the shank (42) with the first intersection line (4311) to the second axis (102) is greater than or equal to a distance (L2) from an intersection point of the skirt portion (41) with the first intersection line (4311) to the second axis (102).

7. The vegetation cutting tool (100) of claim 1, wherein a intersection line of the stop face (431) with a plane defined by the first axis (101) and the second axis (102) is defined as a first intersection line (4311), the difference between a maximum distance (L3) from a surface of the skirt portion (41) to the second axis (102) and a distance (L2) from an intersection point of the skirt portion (41) with the first intersection line (4311) to the second axis (102) is greater than or equal to 0mm and less than or equal to 10mm.

8. The vegetation cutting tool (100) of claim 7, wherein a minimum size (L4) of the stop portion (43) in a direction perpendicular to a plane defined by the first axis (101) and the second axis (102) is greater than or equal to 1 mm and less than or equal to 25mm.

9. The vegetation cutting tool (100) of claim 8, wherein a minimum size (L4) of the stop portion (43) in a direction perpendicular to a plane defined by the first axis (101) and the second axis (102) is greater than or equal to 15mm and less than or equal to 25mm.

10. The vegetation cutting tool (100) of claim 1, wherein a intersection line of the stop face (431) with a plane defined by the first axis (101) and the second axis (102) is defined as a first intersection line (4311), the ratio of between a maximum distance (L3) from a surface of the skirt portion (41) to the second axis (102) and a distance (L2) from an intersection point of the skirt portion (41) with the first intersection line (4311) to the second axis (102) is greater than or equal to 1 and less than or equal to 2.

11. The vegetation cutting tool (100) of claim 10, wherein a minimum size (L4) of the stop portion (43) in a direction perpendicular to a plane defined by the first axis (101) and the second axis (102) is greater than or equal to 15mm and less than or equal to 25mm.

12. The vegetation cutting tool (100) of claim 1, wherein the transmission housing (40) is molded in one-piece.

13. The vegetation cutting tool (100) of claim 1, wherein the transmission housing (40) is molded in one-piece, the stop portion (43) is molded in one-piece, the stop portion (43) is fixed to the skirt portion (41) or the shank (42).

14. The vegetation cutting tool (100) of claim 1, wherein the stop portion (43) forms a first face (432) connecting between the skirt portion (41) and the shank (42) and a second face (433) connecting between the skirt portion (41) and the shank (42), the stop face (431) is connected to the first face (432) and the second face (433), the first face (432) and the second face (433) is symmetrical about a plane defined by the first axis (101) and the second axis (102).

15. The vegetation cutting tool (100) of claim 14, wherein the first face (432) is oblique relative to the second face (433).
